# EUROPEAN PATENT SPECIFICATION

(11) **EP 4 141 385 B1**
(45) Date of publication and mention of the grant of the patent: **04.12.2024**
(21) Application number: 22187197.3
(22) Date of filing: 27.07.2022
(51) Int. Cl.: G01C 15/00, G01S 17/42, G01S 17/66, G01S 7/481, G01S 7/486

(54) **SURVEYING INSTRUMENT**
VERMESSUNGSINSTRUMENT
INSTRUMENT D'ARPENTAGE

(30) Priority: 30.07.2021 JP 2021125970
(43) Date of publication of application: 01.03.2023
(73) Proprietor: TOPCON CORPORATION, Tokyo 174-8580 (JP)
(72) Inventor: YUASA, Taichi, Tokyo-to, 174-8580 (JP)
(74) Representative: Louis Pöhlau Lohrentz

(56) References cited:
- EP-A1- 3 812 700
- EP-A1- 3 842 740
- US-A1- 2014 373 369
- US-A1- 2020 128 201

## Description

### BACKGROUND OF THE INVENTION

The present invention relates to a surveying instrument which can acquire three-dimensional coordinates of an object.

A surveying instrument such as a laser scanner or a total station has an electronic distance meter which detects a distance to an object which is to be measured by the prism distance measurement using a reflecting prism as the object or the non-prism distance measurement using no reflecting prism.

Further, there is also a surveying instrument which can solely perform a plurality of functions, for instance, the distance measurement, the tracking, the confirmation of an irradiating position. Such surveying instruments are known from EP3842740 A1, US2014/373369 A1, US2020/128201 A1, and EP3812700 A1.

However, the distance measurement, the tracking and the like require a light emitter, a photodetector, and an optical system, respectively. Further, it is necessary to keep required intervals between respective elements or optical systems so that the respective elements or the optical systems do not interfere with each other. Therefore, it is difficult to make a laser beam projected from each light emitter coaxial or substantial coaxial, and this could lead to an increase in weight of the surveying instrument due to an increase in the size and an increase in the number of parts.

Further, to make the laser beam projected from each light emitter a rotationally symmetric Gaussian beam, it is necessary to use optical components with complicated configurations, such as anamorphic prisms and cylindrical lenses, which increases a manufacturing cost.

### SUMMARY OF INVENTION

It is an object of the present invention to provide a surveying instrument which can substantially coaxially project a plurality of laser beams with a simple configuration.

To attain the object as described, a surveying instrument according to the present invention includes a distance measuring light projecting module configured to include a light emitting module which projects a laser beam having a predetermined wavelength as a distance measuring light to an object, a distance measuring light receiving module configured to include a photodetector which receives a reflected distance measuring light from the object, and an arithmetic control module configured to control the light emitting module and to calculate a distance to the object based on a light reception result of the reflected distance measuring light with respect to the photodetector, wherein the light emitting module is configured to include at least two light emitters, the optical axes of the laser beams projected by said light emitters are parallel, at least one of said laser beams is said distance measuring light, each light emitter is configured to be arranged in such a manner that a distance between said optical axes is 1 mm to 5 mm, and said laser beams are substantially coaxially projected.

Further, in the surveying instrument according to a preferred embodiment, the light emitting module is configured to include the at least two light emitters which project the distance measuring lights having the same spread angle, and the arithmetic control module is configured to cause the light emitters to repeatedly project the distance measuring lights in sequence.

Further, in the surveying instrument according to a preferred embodiment, the light emitting module is configured to include the at least two light emitters which project the distance measuring lights having the same spread angle, and the arithmetic control module is configured to cause the light emitters to simultaneously project the distance measuring lights.

Further, in the surveying instrument according to a preferred embodiment, the light emitting module is configured to include the at least two light emitters which project the distance measuring lights having different spread angles, and the arithmetic control module is configured to select the light emitter to be driven based on the object or a distance to the object.

Further, in the surveying instrument according to a preferred embodiment, the at least two light emitting modules and a deflecting member configured to substantially coaxially deflect the laser beams projected from the respective light emitting modules are further included.

Further in the surveying instrument according to a preferred embodiment, a tracking light receiving module configured to include a tracking photodetector which receives a reflected tracking light from the object, wherein the light emitting module is configured to include a tracking light emitter which projects as a tracking light a laser beam having a wavelength different from a wavelength of the distance measuring light, and the light emitters and the tracking light emitter are configured in such a manner that the distance measuring light and the tracking light are substantially coaxially projected.

Further, in the surveying instrument according to a preferred embodiment, the light emitting module further comprising a light emitter configured to project a laser beam which is a visible light as a laser pointer light.

Further, in the surveying instrument according to a preferred embodiment, the distance measuring light receiving module and the tracking light receiving module are configured to include a receiving prism which internally reflects the reflected distance measuring light and the reflected tracking light more than once respectively and then separates the reflected distance measuring light and the reflected tracking light from each other.

Furthermore, in the surveying instrument according to a preferred embodiment, a frame unit configured to horizontally rotate around a horizontal rotation shaft by a horizontal rotation motor, a scanning mirror configured to vertically rotate around a vertical rotation shaft by a vertical rotation motor provided in the frame unit, to irradiate the object with the distance measuring light and the tracking light, and to receive the reflected distance measuring light and the reflected tracking light from the object, wherein the arithmetic control module is configured to control the horizontal rotation motor and the vertical rotation motor based on a light receiving position of the reflected tracking light with respect to the tracking photodetector in such a manner that the object is tracked.

According to the present invention, a surveying instrument includes a distance measuring light projecting module configured to include a light emitting module which projects a laser beam having a predetermined wavelength as a distance measuring light to an object, a distance measuring light receiving module configured to include a photodetector which receives a reflected distance measuring light from the object, and an arithmetic control module configured to control the light emitting module and to calculate a distance to the object based on a light reception result of the reflected distance measuring light with respect to the photodetector, wherein the light emitting module is configured to include at least two light emitters, the optical axes of the laser beams projected by said light emitters are parallel, at least one of said laser beams is said distance measuring light, each light emitter is configured to be arranged in such a manner that a distance between said optical axes is 1 mm to 5 mm, and said laser beams are substantially coaxially projected. As a result, a light projecting optical system does not have to be provided for each of the light emitters, and a reduction in the number of the parts and a miniaturization in the size of the light emitting module can be achieved.

### BRIEF DESCRIPTION OF DRAWINGS

FIG.1 is a front cross-sectional view to show a surveying instrument according to a first embodiment of the present invention.
FIG.2A and FIG.2B are block diagrams each to show a distance measuring unit according to the first embodiment of the present invention.
FIG.3 is an explanatory drawing to show of a light emitting module according to the first embodiment of the present invention.
FIG.4 is a block diagram to show a distance measuring unit according to a second embodiment of the present invention.
FIG.5A is a block diagram to show a distance measuring unit of a first modification according to the second embodiment of the present invention, and FIG.5B is a block diagram to show a distance measuring unit of a second modification according to the second embodiment of the present invention.
FIG.6 is a block diagram to show a distance measuring unit according to a third embodiment of the present invention.
FIG.7 is an explanatory drawing to show of a light emitting module according to the third embodiment of the present invention.

### DETAILED DESCRIPTION OF THE PREFERRED EMBODIMENTS

A description will be given below on embodiments of the present invention by referring to the attached drawings.

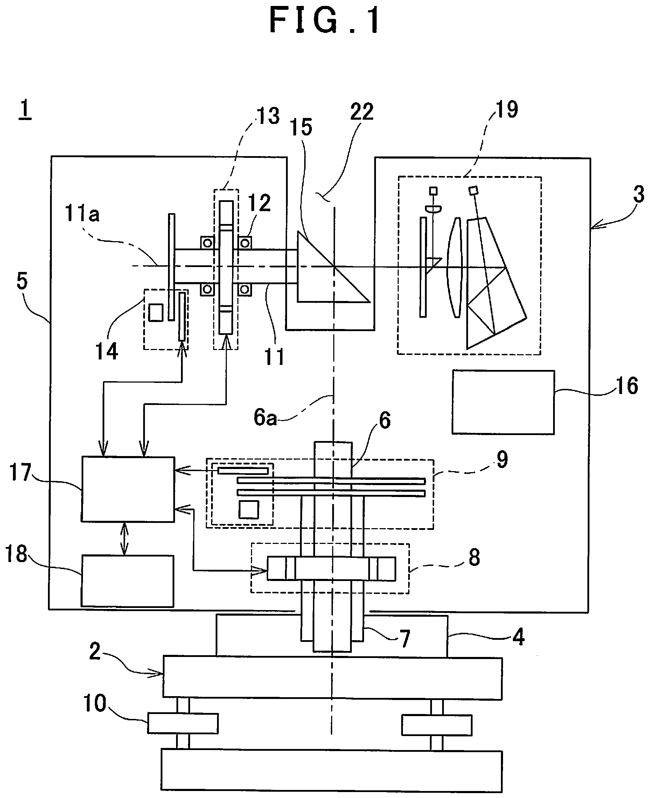

First, by referring to FIG.1, a description will be given on a surveying instrument according to a first embodiment of the present invention.

A surveying instrument 1 is, for instance, a laser scanner. The surveying instrument 1 is configured of a leveling module 2 mounted on a tripod (not shown) and a surveying instrument main body 3 mounted on the leveling module 2.

The leveling module 2 has leveling screws 10, and the surveying instrument main body 3 is leveled up by the leveling screws 10.

The surveying instrument main body 3 includes a fixing unit 4, a frame unit 5, a horizontal rotation shaft 6, a horizontal rotation bearing 7, a horizontal rotation motor 8 as a horizontal rotation driving module, a horizontal angle encoder 9 as a horizontal angle detector, a vertical rotation shaft 11, a vertical rotation bearing 12, a vertical rotation motor 13 as a vertical rotation driving module, a vertical angle encoder 14 as a vertical angle detector, a scanning mirror 15 which is a vertical rotation module, an operation panel 16 which serves as both an operation module and a display module, an arithmetic control module 17, a storage module 18, a distance measuring unit 19 and others. It is to be noted that, as the arithmetic control module 17, a CPU specialized for this instrument or a general-purpose CPU is used.

The horizontal rotation bearing 7 is fixed to the fixing unit 4. The horizontal rotation shaft 6 has a vertical axis 6a, and the horizontal rotation shaft 6 is rotatably supported by the horizontal rotation bearing 7. Further, the frame unit 5 is supported by the horizontal rotation shaft 6, and the frame unit 5 integrally rotates with the horizontal rotation shaft 6 in the horizontal direction.

The horizontal rotation motor 8 is provided between the horizontal rotation bearing 7 and the frame unit 5, and the horizontal rotation motor 8 is controlled by the arithmetic control module 17. The arithmetic control module 17 rotates the frame unit 5 around the axis 6a by the horizontal rotation motor 8.

A relative rotation angle of the frame unit 5 with respect to the fixing unit 4 is detected by the horizontal angle encoder 9. A detection signal from the horizontal angle encoder 9 is input to the arithmetic control module 17, and the horizontal angle data is calculated by the arithmetic control module 17. The arithmetic control module 17 performs the feedback control of the horizontal rotation motor 8 based on the horizontal angle data.

Further, in the frame unit 5, the vertical rotation shaft 11 having a horizontal axis 11a is provided. The vertical rotation shaft 11 can rotate via the vertical rotation bearing 12. It is to be noted that an intersection of the axis 6a and the axis 11a is a projecting position for a distance measuring light, and the intersection is an origin of a coordinate system of the surveying instrument main body 3.

A recess portion 22 is formed in the frame unit 5. One end portion of the vertical rotation shaft 11 extends to the inside of the recess portion 22. Further, the scanning mirror 15 is fixed to the one end portion, and the scanning mirror 15 is accommodated in the recess portion 22. Further, the vertical angle encoder 14 is provided at the other end portion of the vertical rotation shaft 11.

The vertical rotation motor 13 is provided on the vertical rotation shaft 11, and the vertical rotation motor 13 is controlled by the arithmetic control module 17. The arithmetic control module 17 rotates the vertical rotation shaft 11 by the vertical rotation motor 13. Further, the scanning mirror 15 is rotated around the axis 11a.

A rotation angle of the scanning mirror 15 is detected by the vertical angle encoder 14, and a detection signal is input to the arithmetic control module 17. The arithmetic control module 17 calculates the vertical angle data of the scanning mirror 15 based on the detection signal, and performs the feedback control of the vertical rotation motor 13 based on the vertical angle data.

Further, the horizontal angle data and the vertical angle data calculated by the arithmetic control module 17, and the measurement results are stored in the storage module 18. As the storage module 18, various types of storage devices are used. These storage devices include: an HDD as a magnetic storage device, a CD or DVD as an optical storage device, a memory card and a USB memory as a semiconductor storage device and other storage devices. The storage module 18 may be attachable to and detachable from the frame unit 5. Alternatively, the storage module 18 may enable transmitting the data to an external storage device or an external data processing device via a non-illustrated communicating means.

In the storage module 18, various types of programs are stored. These programs include: a control program for controlling the driving of light emitters of a light emitting module (to be described later), a sequence program for controlling a distance measuring operation, a calculation program for calculating a distance by the distance measuring operation, a calculation program for calculating an angle based on the horizontal angle data and the vertical angle data, a calculation program for calculating three-dimensional coordinates of a desired measuring point based on a distance and an angle and other programs. Further, when the various types of programs stored in the storage module 18 are executed by the arithmetic control module 17, various types of processing are performed.

The operation panel 16 is, for instance, a touch panel. The operation panel 16 serves as both an operation module which performs changing distance measurement instructions or measurement conditions such as a measuring point interval and a display module which displays distance measurement results, images, and the like.

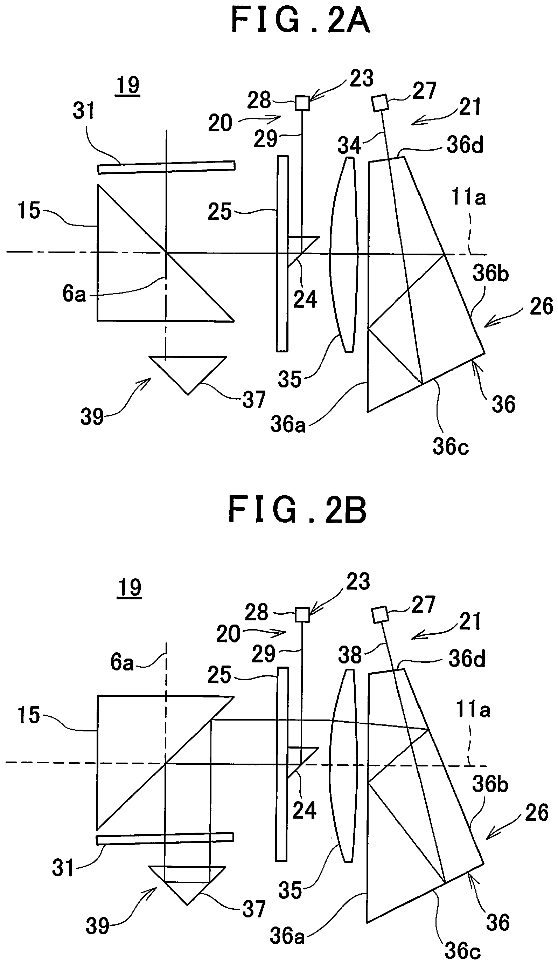

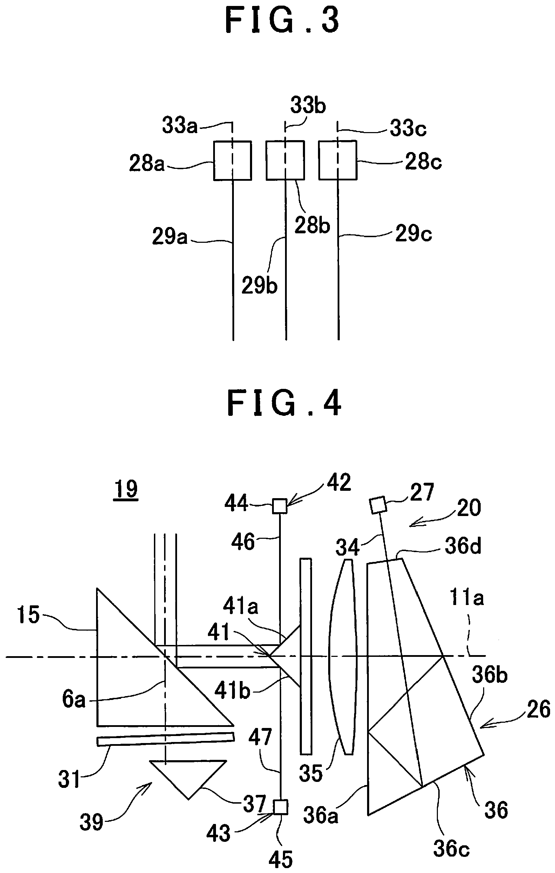

Next, a description will be given on the distance measuring unit 19 by referring to FIG.2A, FIG.2B, and FIG.3.

The distance measuring unit 19 has a projecting module 20 as a distance measuring light projecting module and a light receiving module 21 as a distance measuring light receiving module. It is to be noted that the projecting module 20 and the light receiving module 21 configure a distance measuring module.

The projecting module 20 has a projecting optical axis. Further, the projecting module 20 has a light emitting module 23 provided on the projecting optical axis, a reflecting prism 24 as a deflecting member, and a fixing member 25 which is fixed the reflecting prism 24. Further, the scanning mirror 15 is provided on the projecting optical axis reflected by the reflecting prism 24. The fixing member 25 is formed with the use of a transparent material such as a glass plate. Further, a window portion 31 which is formed of a transparent material and integrally rotates with the scanning mirror 15 is provided on a reflected optical axis of the scanning mirror 15.

Further, the light receiving module 21 has a light receiving optical axis. Further, the light receiving module 21 has a photodetector 27 and a receiving prism 36 provided on the light receiving optical axis, and a focusing lens 35 with a predetermined NA provided on the light receiving optical axis reflected by the receiving prism 36. It is to be noted that the receiving prism 36 and the focusing lens 35 configure a light receiving optical system 26. Further, in the present embodiment, the light receiving optical axis and a light receiving optical axis reflected by the receiving prism 36 are generically referred to as a light receiving optical axis.

As shown in FIG.3, the light emitting module 23 is configured to a plurality of light emitters 28 (light emitters 28a, 28b 28c in FIG.3). The light emitter 28 is, for instance, a PCSEL (Photonic Crystal Surface Emitting Laser) light source.

The PCSEL light source is a surface-emitting semiconductor laser element having a photonic crystal structure. The PCSEL light source can expand a light-emitting area while assuring the beam quality of a laser beam and can project a high-output laser beam as a parallel light. Further, when the PCSEL light source controls a hole shape of a photonic crystal or a phase of a lattice point, a beam shape can be controlled.

In the present embodiment, a size of a light emission area of the light emitter 28 is 0.1 mm to 5 mm, and the respective light emitters 28a to 28c are designed so that a Gaussian beam having a rotationally symmetric beam shape can be obtained. Further, the respective light emitters 28a to 28c have the same configuration and can project laser beams having the same beam diameter (a spread angle) and the same wavelength.

It is to be noted that the light emitters 28a to 28c may simultaneously project laser beams having the same wavelength as a distance measuring light 29 (distance measuring lights 29a to 29c). Alternatively, the light emitters 28a to 28c may sequentially repeatedly project the distance measuring lights 29a to 29c at projection intervals longer than a pulse turnaround time.

Further, the light emitters 28a to 28c are adjacently arranged at, for instance, intervals of several mm. Distance measuring optical axes 33a to 33c of the respective distance measuring lights 29a to 29c are parallel, and a positional relationship (distances) between the respective distance measuring optical axes 33a to 33c is known. It is to be noted that each of the distances between the distance measuring optical axes 33a to 33c is, for instance, approximately 1 mm to 5 mm, and the distance measuring optical axes 33a to 33c can be regarded as substantially coaxial. Further, the distance measuring optical axes 33a to 33c regarded as substantially coaxial are also all referred to as a distance measuring optical axis 33.

The distance measuring unit 19 is controlled by the arithmetic control module 17. When the pulsed distance measuring light 29 is projected onto the distance measuring optical axis 33 from the light emitter 23, the distance measuring light 29 is projected via the reflecting prism 24 and the fixing member 25. The distance measuring optical axis 33 of the distance measuring light 29 projected from the reflecting prism 24 coincides with the axis 11a, and the distance measuring light 29 is deflected at a right angle by the scanning mirror 15 and irradiated to an object through the window portion 31. When the scanning mirror 15 rotates around the axis 11a, the distance measuring light 29 becomes orthogonal to the axis 11a, and the distance measuring light 29 is rotated (scanned) within a plane including the axis 6a.

It is to be noted that the window portion 31 is provided in a state where the window portion 31 tilts at a predetermined angle with respect to the optical axis of the distance measuring optical axis 33 so that the distance measuring light 29 reflected by the window portion 31 does not enter the photodetector 27.

The distance measuring light 29 reflected by the object (hereinafter a reflected distance measuring light) is reflected at a right angle by the scanning mirror 15, and the reflected distance measuring light is received by the photodetector 27 via the light receiving optical system 26. The photodetector 27 is, for instance, an avalanche photodiode (APD) or an equivalent photoelectric conversion element.

The arithmetic control module 17 performs the distance measurement for each pulse of the distance measuring light 29 based on a time lag between a light emission timing of the light emitter 28 and a light reception timing of the photodetector 27 (that is, a round-trip time of the pulsed light), and a light velocity (Time of Flight). It is to be noted that the operation panel 16 can change the light emission timing, that is, a pulse interval of the light emitter 28.

It is to be noted that an internal reference light optical system (to be described later) is provided in the distance measuring unit 19. By performing the distance measurement based on a time lag between the light reception timing for the internal reference light (to be described later) received from the internal reference light optical system and the light reception timing of the reflected distance measuring light and light velocity, the distance measuring unit 19 enables the further accurate distance measurement.

The frame unit 5 and the scanning mirror 15 are rotated at a constant speed, respectively. A two-dimensional scan by the distance measuring light 29 is performed by the cooperation between the vertical rotation of the scanning mirror 15 and the horizontal rotation of the frame unit 5. Further, the distance measurement data (slope distance) is acquired by the distance measurement for each pulsed light, by detecting a vertical angle and a horizontal angle for each pulsed light by the vertical angle encoder 14 and the horizontal angle encoder 9, the arithmetic control module 17 enables calculating the vertical angle data and the horizontal angle data. Three-dimensional coordinates of the object and the three-dimensional point cloud data corresponding to the object can be acquired based on the vertical angle data, the horizontal angle data, and the distance measurement data.

Next, a description will be given on the light receiving optical system 26. It is to be noted that, in FIG.2 and FIG.3, only a chief ray (a projecting optical axis) of the distance measuring light 29 and a chief ray beam (a light receiving optical axis) of the reflected distance measuring light 34 are shown.

The receiving prism 36 is a square prism having a predetermined refractive index. Further, the receiving prism 36 has a first surface 36a which the reflected distance measuring light 34 transmitted through the focusing lens 35 enters, a second surface 36b which reflects the reflected distance measuring light 34 transmitted through a plane of the first surface 36a, a third surface 36c which the reflected distance measuring light 34 reflected by the second surface 36b and the first surface 36a enters, and a fourth surface 36d as a transmission surface which the reflected distance measuring light 34 reflected by the third surface 36c is transmitted through. The reflected distance measuring light 34 transmitted through the fourth surface 36d enters the photodetector 27. It is to be noted that, the third surface 36c reflects the reflected distance measuring light 34 in such a manner that the reflected distance measuring light 34 crossed the reflected distance measuring light 34 entered the first surface 36a.

Further, a reference prism 37 having a retroreflective property is provided below the scanning mirror 15. In a process of the rotational irradiation of the distance measuring light 29 via the scanning mirror 15, a part of the distance measuring light 29 enters the reference prism 37. The distance measuring light 29 retro-reflected by the reference prism 37 is configured to enter the light receiving optical system 26 via the scanning mirror 15, and to be received by the photodetector 27.

Here, an optical path length from each of the light emitters 28a to 28c to the reference prism 37 and an optical path length from the reference prism 37 to the photodetector 27 are known. Therefore, the distance measuring light 29 reflected by the reference prism 37 can be used as an internal reference light 38. The scanning mirror 15 and the reference prism 37 configure an internal reference light optical system 39.

Next, a description will be given on a case where the measurement is performed by the surveying instrument 1 having the distance measuring unit 19. Various types of operations of the distance measuring unit 19 are performed when the arithmetic control module 17 executes various types of programs. It is to be noted that a case where the non-prism measurement is performed will be described below.

The object is irradiated with the distance measuring light 29 (the distance measuring lights 29a to 29c) emitted from the light emitter 28 (the light emitters 28a to 28c) via the reflecting prism 24, the fixing member 25, and the scanning mirror 15. The reflected distance measuring light 34 (the reflected distance measuring lights 34a to 34c) which has been reflected by the object and entered the light receiving optical system 26 via the scanning mirror 15 is refracted in a process of being transmitted through the focusing lens 35 and the first surface 36a. Further, the reflected distance measuring light 34 is sequentially reflected by the second surface 36b and the first surface 36a in the receiving prism 36, and enters the third surface 36c. Further, the reflected distance measuring light 34 is reflected by the third surface 36c so that the reflected distance measuring light 34 crosses the reflected distance measuring light 34 having entered the first surface 36a, and the reflected distance measuring light 34 is then transmitted through the fourth surface 36d and received by the photodetector 27.

The arithmetic control module 17 calculates three-dimensional coordinates of an irradiating point (a measuring point) of the distance measuring light 29 based on a distance measurement result of the distance measuring unit 19 and detection results of the horizontal angle encoder 9 and the vertical angle encoder 14. Further, the arithmetic control module 17 acquires the three-dimensional point cloud data of the whole circumference (360°) by the cooperation between the horizontal rotation of the frame unit 5 and the vertical rotation of the scanning mirror 15.

It is to be noted that a distance measurement result calculated by the distance measuring light 29a projected from the light emitter 28a, a distance measurement result calculated by the distance measuring light 29b projected from the light emitter 28b, and a distance measurement result calculated by the distance measuring light 29c projected from the light emitter 28c are corrected with reference to any of distance measurement results based on a known positional relationship of the distance measuring optical axes 33a to 33c.

At this time, by correcting the distance measurement results based on a light reception result of the internal reference light 38 retro-reflected by the reference prism 37, a distance measurement accuracy can be improved.

As described above, in the first embodiment, the three light emitters 28a to 28c adjacently arranged so that the respective optical axes become parallel configure the light emitting module 23, and the light emitters 28a to 28c are configured to project the distance measuring lights 29a to 29c having the same wavelength.

Therefore, by simultaneously projecting the distance measuring lights 29a to 29c from the light emitters 28a to 28c and combining light reception signals when the reflected distance measuring lights 34a to 34c (the reflected distance measuring light 34 in FIG.2) are received by the photodetector 27, the arithmetic control module 17 enable substantially approximately tripling a light reception amount. Thereby, a distance reached by the distance measuring light 29 to be extended and a measurable distance to be extended.

Further, by staggering projection timings of the distance measuring lights 29a to 29c projected from the light emitters 28a to 28c and sequentially projecting the distance measuring lights 29a to 29c from the light emitters 28a to 28c, the arithmetic control module 17 enable increasing a repetition frequency of the laser of the light emitting module 23. Further, by selecting any one of the light emitters 28a to 28c to perform the light emission, the arithmetic control module 17 enables adjusting the repetition frequency, the density of the point cloud data to be acquired can be adjusted.

Further, since the PCSEL light sources are used as the light emitters 28a to 28c, an optical system such as a lens for turning the distance measuring lights 29a to 29c to parallel light fluxes does not have to be provided. Therefore, since the interference between the optical systems does not have to be taken into consideration, installation intervals of the light emitters 28a to 28c can be narrowed, and a reduction in the number of parts and a reduction in the manufacturing cost can be achieved.

Further, since the light emitters 28a to 28c are adjacently arranged so that distances between optical axes become 1 mm to 5 mm, the distance measuring lights 29a to 29c become substantially coaxial, and an improvement in measurement accuracy can be achieved. Further, since a light projection optical system does not have to be provided for each of the light emitters 28a to 28c, the light emitting module 23 can be miniaturized, and the distance measuring unit 19 can be miniaturized.

The receiving prism 36 is used as the light receiving optical system 26, and the reflected distance measuring light 34 is internally reflected in the receiving prism 36 more than once. Thereby, an optical path of the reflected distance measuring light 34 can be bent, and an optical path length for a focal distance of the focusing lens 35 can be assured.

Therefore, since a length in an optical axis direction of the light receiving optical system 26 can be shortened, an optical system of the distance measuring unit 19 can be miniaturized, and the entire surveying instrument can be miniaturized.

It is to be noted that the three light emitters 28 configure the light emitting module 23 in the first embodiment. On the other hand, the light emitting module 23 may be configured by two light emitters 28 or may be configured by four or more light emitters.

Further, the single photodetector 27 is described in the first embodiment. On the other hand, the plurality of photodetectors may be provided in correspondence with the number of the light emitters 28 in the first embodiment.

Further, the three light emitters 28a to 28c are adjacently arranged so as to form a single row in the first embodiment. On the other hand, the three light emitters 28a to 28c may be regularly arranged and assembled so that each distance between the optical axes of the respective light emitters 28 becomes approximately several mm, and the three light emitters 28a to 28c may be used as the light emitting module 23.

Further, the light emitters 28a to 28c have the same configuration and are configured to project the distance measuring lights 29 having the same diameter. On the other hand, a light emission area (a spread angle) may differ for each of the light emitters 28a to 28c.

By causing the arithmetic control module 17 to select a light emitter with a small light emission area (a large spread angle) in a case where the object is positioned at a short distance and select to a light emitter with large light emission area (a small spread angle) in a case where the object is positioned at a long distance, the arithmetic control module 17 enables minimizing a beam diameter of the distance measuring light 29 with respect to the object and improving a measurement resolution.

Further, PCSEL light sources with different light emission energies may be used as the light emitters. When the light emitter is appropriately selected in correspondence with a distance to the object, the distance measurement can be performed at a no saturation and an appropriate light intensity from the near to far distance, and an improvement in measurement accuracy and the expansion of a measurable dynamic range can be achieved.

Next, by referring to FIG.4, a description will be given on a second embodiment of the present invention. It is to be noted that, in FIG.4, the same components as shown in FIG.2 are referred by the same symbols, and a detailed description thereof will be omitted.

In the first embodiment, by using the PCSEL light sources as each light emitter 28 and by adjacently arranging the light emitters 28 at intervals of several mm, optical axes of the respective light emitters 28 are substantially coaxial. On the other hand, when the number of the light emitters 28 are increased, making the optical axes of the respective light emitters 28 substantially coaxial is difficult even if the respective light emitters 28 are adjacently arranged or assembled in an array.

In a distance measuring unit 19 in the second embodiment, a plurality of light emitting modules consisting of a plurality of light emitters are provided, and a reflecting mirror 41 is arranged as a deflecting member in place of a reflecting prism 24 (see FIG.2).

On an axis 11a of a vertical rotation shaft 11, the reflecting mirror 41 attached to a fixing member 25 so that it projects to a scanning mirror 15 side is provided. The reflecting mirror 41 is a mirror with a triangular cross section which has two reflecting surfaces 41a, 41b, and each of the reflecting mirrors 41a, 41b tilts at, for instance, 45° with respect to the axis 11a. It is to be noted that a prism having a triangular shape may be used as the deflecting member in place of a mirror having a triangular shape.

A first light emitting module 42 is provided in a direction orthogonal to the axis 11a. Further, a second light emitting module 43 is provided at a position symmetrical with respect to the first light emitting module 42 and the axis 11a. The first light emitting module 42, the reflecting mirror 41, and the fixing member 25 configure a first distance measuring light projecting module, and the second light emitting module 43, the reflecting mirror 41, and the fixing member 25 configure a second distance measuring light projecting module.

The first light emitting module 42 has a configuration equivalent to, for instance, a configuration of the light emitting module 23 (see FIG.2), and the first light emitting module 42 is constituted of three light emitters 44a to 44c (a light emitter 44 in FIG.4), respectively. Further, the second light emitting module 43 also has a configuration equivalent to, for instance, a configuration of the light emitting module 23, and the second light emitting module 43 is constituted of three light emitters 45a to 45c (a light emitter 45 in FIG.4), respectively.

It is to be noted that, needless to say, each of the first light emitting module 42 and the second light emitting module 43 may be configured by two light emitters or may be configured by four or more light emitters.

A first distance measuring light 46 is projected from the light emitter 44 and enters on the reflecting surface 41a. The first distance measuring light 46 is deflected at a right angle by the reflecting surface 41a so that an axis of the first distance measuring light 46 becomes substantially coaxial with the axis 11a, and enters on the scanning mirror 15. Further, a second distance measuring light 47 is projected from the light emitter 45 and enters on the reflecting surface 41b. The second distance measuring light 47 is deflected at a right angle by the reflecting surface 41b so that an axis of the second distance measuring light 47 becomes substantially coaxial with the axis 11a, and enters on the scanning mirror 15.

At this time, a distance between optical axes of the respective light emitters 44 is approximately several mm, and a distance between optical axes of the respective light emitters 45 is approximately several mm. A size of the reflecting mirror 41 is set in such a manner that a distance between each optical axis of the first distance measuring light 46 reflected by the reflecting surface 41a and each optical axis of the second distance measuring light 47 reflected by the reflecting surface 41b becomes approximately several mm around the axis 11a.

In the second embodiment, the plurality of light emitting modules configured by the plurality of light emitters are provided, and the distance measuring light is deflected by the reflecting mirror 41 so that the axis of the distance measuring light becomes substantially coaxial with the axis 11a in accordance with each light emitting module. Therefore, even if the number of the light emitters is increased, the optical axis of the distance measuring light projected from each light emitter can be made substantially coaxial with the axis 11a. Thereby, by controlling the light emission of each light emitter, the arithmetic control module 17 enables adjusting a light receiving amount and adjusting a repetition frequency, and an improvement in surveying accuracy can be achieved.

It is to be noted that, in the second embodiment, the reflecting mirror 41 is a mirror with a triangular cross section and the two light emitting modules are provided. On the other hand, it is needless to say that the reflecting mirror 41 may have a three-sided pyramid and three light emitting modules may be provided, or the reflecting mirror 41 may have a four-sided pyramid and four light emitting modules may be provided.

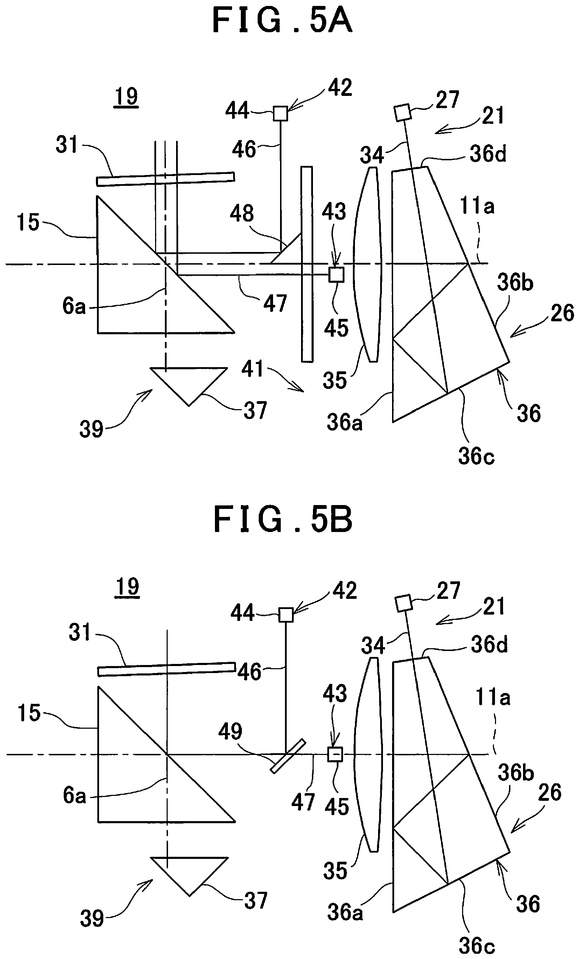

Further, the configuration that the plurality of light emitting modules are provided is not restricted to the above-described configuration. FIG.5A and FIG.5B show modifications of the second embodiment.

In a first modification shown in FIG.5A, the second light emitting module 43 is arranged so that a second distance measuring light 47 projected from the light emitter 45 is projected substantially coaxially with the axis 11a. Further, a reflecting mirror 48 is used as a deflecting member, and the reflecting mirror 48 is arranged at a position slightly displaced from the axis 11a in a direction orthogonal with respect to the axis 11a. It is to be noted that the reflecting mirror 48 is arranged so that the reflecting mirror 48 does not block the second distance measuring light 47 emitted from the light emitter 45.

The first modification is configured in such a manner that the first distance measuring light 46 projected from the light emitter 44 of the first light emitting module 42 is deflected by the reflecting mirror 48 so that the first distance measuring light 46 becomes substantially coaxial with the axis 11a, and the second distance measuring light 47 is projected from the light emitter 45 substantially coaxial with the axis 11a.

Therefore, the first distance measuring light 46 and the second distance measuring light 47 can be substantially coaxially projected and, even if the number of the light emitters is increased, the optical axis of the distance measuring light projected from each light emitter can be made substantially coaxial.

A second modification shown in FIG.5B is configured in such a manner that a wavelength of the first distance measuring light 46 projected from the light emitter 44 is different from a wavelength of the second distance measuring light 47 projected from the light emitter 45.

Further, in the second modification, the second light emitting module 43 is arranged so that the second distance measuring light 47 projected from the light emitter 44 is projected onto the axis 11a (coaxially). Further, a dichroic mirror 49 may be used as a deflecting member. The dichroic mirror 49 has optical characteristics to reflect the first distance measuring light 46 and to transmit through the second distance measuring light 47.

The second modification is configured in such a manner that the first distance measuring light 46 projected from the light emitter 44 is deflected by the dichroic mirror 49 so that it becomes coaxial with the axis 11a, and the second distance measuring light 47 projected from the light emitter 45 coaxially with the axis 11a is transmitted through the dichroic mirror 49.

Therefore, the first distance measuring light 46 and the second distance measuring light 47 can be coaxially projected and, even if the number of the light emitters is increased, the optical axis of the distance measuring light projected from each light emitter can be made coaxial.

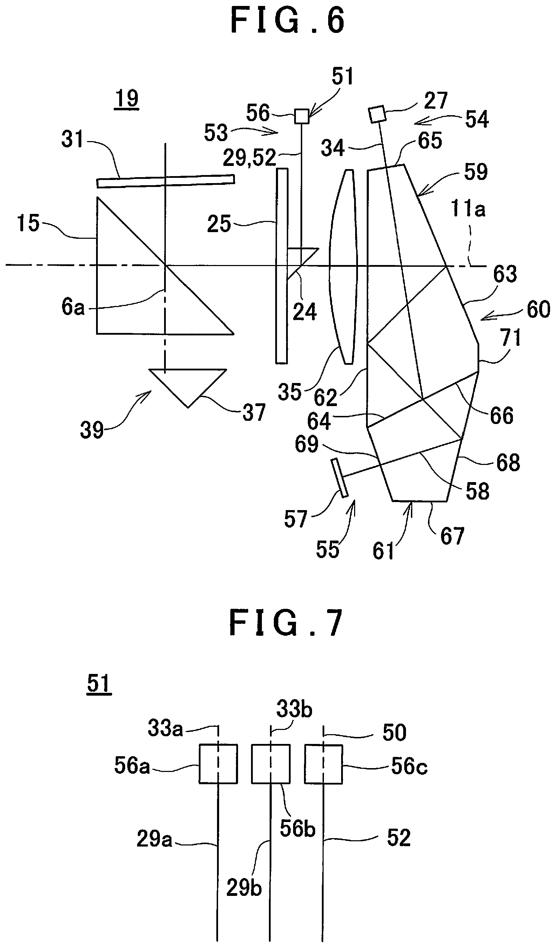

Next, by referring to FIG.6 and FIG.7, a description will be given on a third embodiment of the present invention. It is to be noted that, in FIG.6, the same components as shown in FIG.2 are referred by the same symbols, and a detailed description thereof will be omitted. A distance measuring light 29, a chief ray (a distance measuring optical axis, a tracking optical axis) of a tracking light (to be described later), a reflected distance measuring light 34, and a chief ray (a distance measurement light receiving optical axis, a tracking light receiving optical axis) of a reflected tracking light (to be described later) are only described.

The third embodiment is configured in such a manner that a distance measuring unit 19 has a distance measurement function and a tracking function and a light emitting module 51 can project the distance measuring light 29 and a tracking light 52. That is, in the third embodiment, a projecting module 53 serves as both a distance measuring light projecting module and a tracking light projecting module. Further, in the third embodiment, a light receiving module is configured by a distance measuring light receiving module 54 and a tracking light receiving module 55.

As shown in FIG.7, the light emitting module 51 is configured by, for instance, three light emitters 56a to 56c which are PCSEL light sources. The present embodiment is configured in such a manner that the light emitter 56a projects a distance measuring light 29a for the prism distance measurement onto a distance measuring optical axis 33a, the light emitter 56b projects a distance measuring light 29b for the non-prism distance measurement onto a distance measuring optical axis 33b, and the light emitter 56c as a tracking light emitter projects the tracking light 52 onto a tracking optical axis 50. Further, positional relationships (distances) between the distance measuring optical axis 33a, the distance measuring optical axis 33b, and the tracking optical axis 50 are known.

The distance measuring lights 29a, 29b projected from the light emitter 56a and the light emitter 56b are laser beams (invisible lights) having the same wavelength which is an infrared or near-infrared wavelength. On the other hand, the light emitter 56a has a smaller light emission area than a light emission area of the light emitter 56b, and the distance measuring light 29a has a larger spread angle than a spread angle of the distance measuring light 29b.

Further, the light emitter 56c has a smaller light emission area than the light emission areas of the light emitters 56a, 56b. Further, the light emitter 56c is configured to project as the tracking light 52 a laser beam (an invisible light) which has an infrared or near-infrared wavelength different from wavelengths of the distance measuring lights 29a, 29b and has a spread angle larger than the spread angle of the distance measuring lights 29a, 29b.

The distance measuring light receiving module 54 has a distance measurement light receiving optical axis. Further, the distance measuring light receiving module 54 has a photodetector 27 and a receiving prism 60 provided on the distance measurement light receiving optical axis, and also has a focusing lens 35 provided on a reflected optical axis of the distance measurement light receiving optical axis reflected by the receiving prism 60. It is to be noted that the receiving prism 60 and the focusing lens 35 configure a distance measurement light receiving optical system. Further, in the present embodiment, the distance measurement light receiving optical axis and the reflected optical axis of the distance measurement light receiving optical axis reflected by the receiving prism 60 are generically referred to as the distance measurement light receiving optical axis.

The tracking light receiving module 55 has a tracking light receiving optical axis. Further, the tracking light receiving module 55 has a tracking photodetector 57 and the receiving prism 60 provided on the tracking light receiving optical axis, and also has the focusing lens 35 provided on the reflected optical axis of the tracking light receiving optical axis reflected by the receiving prism. It is to be noted that the receiving prism 60 and the focusing lens 35 also configure a tracking light receiving optical system. Further, in the present embodiment, the tracking light receiving optical axis and the reflected optical axis of the tracking light receiving optical axis reflected by the receiving prism 60 are generically referred to as the tracking light receiving optical axis.

The tracking photodetector 57 is constituted as a photodetector which receives the tracking light 52 reflected by an object as a reflected tracking light 58. The tracking photodetector 57 is a CCD or a CMOS sensor which is an aggregation of pixels, and a position of each pixel on the tracking photodetector 57 can be identified. For instance, each pixel has pixel coordinates in a coordinate system with the center of the tracking photodetector 57 as an origin, and its position on the tracking photodetector 57 can be identified by the pixel coordinates. Each pixel outputs pixel coordinates together with a light reception signal to the arithmetic control module 17.

Next, a description will be given on the detail of the receiving prism 60.

The receiving prism 60 is configured by a first prism 59 which is a pentagonal dichroic prism having a predetermined refractive index and a second prism 61 which is a rectangular dichroic prism having a predetermined refractive index. Further, the first prism 59 is integrated with the second prism 61.

The first prism 59 has a first surface 62 facing the focusing lens 35, a second surface 63 facing the first surface 62, a third surface 64 placed on a lower side with respect to a paper surface in FIG.6, and a fourth surface 65 placed on an upper side with respect to the paper surface in FIG.6 and facing the third surface 64.

Further, the second prism 61 has a fifth surface 66 facing the third surface 64, a sixth surface 67 facing the fifth surface 66, a seventh surface 68 placed on a right side with respect to the paper surface in FIG.6, and an eighth surface 69 placed on a left side with respect to the paper surface in FIG.5 and facing the seventh surface 68.

The first prism 59 and the second prism 61 are integrated via the third surface 64 and the fifth surface 66. Further, a corner portion formed by the second surface 63 and the third surface 64 is chamfered, and a chamfered portion 71 is formed. By the chamfered portion 71, the first prism 59 becomes a pentagonal prism. Further, by the chamfered portion 71, an area of the third surface 64 coincides with an area of the fifth surface 66, and the flush receiving prism 60 is formed of the first prism 59 and the second prism 61. Further, the chamfered portion 71 is formed outside optical paths of the reflected distance measuring light 34 and the reflected tracking light 58.

A dichroic filter film is provided on a boundary surface between the third surface 64 and the fifth surface 66. The dichroic filter film is configured to reflect the reflected distance measuring light 34 and transmit through the reflected tracking light 58. That is, the boundary surface between the third surface 64 and the fifth surface 66 is a separating surface separating the reflected distance measuring light 34 and the reflected tracking light 58 from each other. It is to be noted that the dichroic filter film may be configured to transmit through the reflected distance measuring light 34 and reflect the reflected tracking light 58.

Next, a description will be given on a case where the measurement and the tracking are performed by the surveying instrument 1 having the distance measuring unit 19. It is to be noted that, in the following description, a movable object such as a prism is measured (the prism measurement), and the distance measuring light 29a is projected from the light emitter 56a alone. The distance measuring light 29a is simply referred to as a distance measuring light 29. Further, various types of operations of the distance measuring unit 19 are performed when the arithmetic control module 17 (see FIG.1) executes various types of programs.

The distance measuring light 29 projected from the light emitter 56a is deflected at a right angle by the reflecting prism 24, further deflected at a right angle by the scanning mirror 15, and irradiated to a predetermined object via a window portion 31. The reflected distance measuring light 34 reflected by the object enters the scanning mirror 15 via the window portion 31, is deflected at a right angle by the scanning mirror 15, and enters the receiving prism 60 while being condensed by the focusing lens 35.

The reflected distance measuring light 34 transmitted through the first surface 62 is internally reflected on the second surface 63, the first surface 62, and the dichroic filter film on the third surface 64 in sequence (three times). On the third surface 64, the reflected distance measuring light 34 is reflected so that the reflected distance measuring light 34 crosses the reflected distance measuring light 34 having entered the first surface 62, and the reflected distance measuring light 34 enters the fourth surface 65. The reflected distance measuring light 34 which has entered the fourth surface 65 is transmitted through the fourth surface 65 and is received by the photodetector 27.

The arithmetic control module 17 calculates the distance measurement data (a slope distance) based on a time lag between a light emission timing of the light emitter 56a and a light reception timing of the photodetector 27 (that is, a round-trip time of a pulsed light) and a light velocity (Time of Flight). Further, by detecting a vertical angle and a horizontal angle for each pulsed light by the vertical angle encoder 14 (see FIG.1) and the horizontal angle encoder 9 (see FIG.1), the arithmetic control module 17 enables acquiring the vertical angle data and the horizontal angle data. Three-dimensional coordinates corresponding to the object can be calculated with the use of the vertical angle data, the horizontal angle data, and the distance measurement data.

Further, in parallel with the distance measurement operation described above, the light emitter 56c projects the tracking light 52 substantially coaxially with the distance measuring light 29. The tracking light 52 is deflected at a right angle by the reflecting prism 24, further deflected at a right angle by the scanning mirror 15, and irradiated to a predetermined object via the window portion 31. The reflected tracking light 58 reflected by the object enters the scanning mirror 15 via the window portion 31, is deflected at a right angle by the scanning mirror 15, and enters the receiving prism 60 while being condensed by the focusing lens 35.

The reflected tracking light 58 transmitted through the first surface 62 is internally reflected on the second surface 63 and the first surface 62 in sequence (twice), and then transmitted through the dichroic filter film of the third surface 64. The reflected tracking light 58 transmitted through the third surface 64 is internally reflected by the seventh surface 68, then transmitted through the eighth surface 69, and received by the tracking photodetector 57.

The arithmetic control module 17 calculates a deviation between the center of the tracking photodetector 57 and an incidence position of the reflected tracking light 58, and controls the horizontal rotation motor 8 and the vertical rotation motor 13 so that the incidence position of the reflected tracking light 58 coincides with the center of the tracking photodetector 57 based on the deviation. Thereby, the surveying instrument main body 3 tracks the object. It is to be noted that the incidence position of the reflected tracking light 58 on the photodetector 27 as a reference may be a position offset from the center based on a known positional relationship of the distance measuring optical axis 33 and the tracking optical axis 50.

In the case where the distance measuring unit 19 performs the prism distance measurement has been described above. On the other hand, in case of performing the non-prism distance measurement, the distance measuring light 29b is projected from the light emitter 56b alone, and the same processing as that described above is performed. The arithmetic control module 17 selects a light emitter to be driven based on whether the object is the prism.

Further, in case of acquiring the point cloud data of the whole circumference a frame unit 5 (see FIG.1) and the scanning mirror 15 are rotated at constant speeds, respectively, and a two-dimensional scan using the distance measuring light 29 is performed by the cooperation between the vertical rotation of the scanning mirror 15 and the horizontal rotation of the frame unit 5. At this time, by calculating three-dimensional coordinates in accordance with each pulsed light, the arithmetic control module 17 enables acquiring the three-dimensional point cloud data of the whole circumference.

As described above, in the third embodiment, the light emitting module 51 is configured by the light emitters 56a, 56b which project the distance measuring light 29 and the light emitter 56c which projects the tracking light 52. That is, the light emitting module 51 serves as both a distance measuring light projecting module and a tracking light projecting module.

Therefore, by changing only a part of the light emitters configuring the light emitting module 51, the light emitting module 51 enables becoming the tracking light projecting module. Therefore, the tracking light projecting module does not have to be additionally provided, and a reduction in the number of parts and the miniaturization of the distance measuring unit 19 can be achieved.

Further, in the third embodiment, the light emitting module 51 has the light emitter 56a which projects the distance measuring light 29a for performing the prism distance measurement and the light emitter 56b which projects the distance measuring light 29b for performing the non-prism distance measurement.

Therefore, by just changing the light emitter 56 to be driven, the selection of the prism distance measurement and the non-prism distance measurement enable performing, the instrument configuration can be simplified.

Further, the dichroic filter film is provided on the boundary surface between the third surface 64 and the fifth surface 66 of the receiving prism 60. Therefore, since the reflected distance measuring light 34 can be separated from the reflected tracking light 58 by the dichroic filter film, the receiving prism for shortening the optical paths for the reflected distance measuring light 34 can serve as the receiving prism for shortening the optical path for the reflected tracking light 58, and a reduction in the number of parts and in size of the optical system can be achieved.

It is to be noted that, in the third embodiment, the light emitting module 51 is configured to use the light emitters which project the distance measuring light 29 and the tracking light 52. On the other hand, a light emitter which projects a laser beam which is a visible light as a laser pointer light may be used. For instance, the light emitter 56a may be configured to project the distance measuring light 29, the light emitter 56c may be configured to project the tracking light 52, and the light emitter 56b may be configured to project the laser pointer light. By using the laser pointer light, since a worker can confirm an irradiating position of the distance measuring light 29, and the workability can be improved.

Further, it is needless to say that the first embodiment to the third embodiment and the modification of the second embodiment can be appropriately combined and the light emitters having different light emission areas can be appropriately combined.

## Claims

1. A surveying instrument comprising : a distance measuring light projecting module (20, 53) configured to include a light emitting module (23, 42, 43, 51) which projects a laser beam having a predetermined wavelength as a distance measuring light (29) to an object, a distance measuring light receiving module (21, 54) configured to include a photodetector (27) which receives a reflected distance measuring light (34) from said object, and an arithmetic control module (17) configured to control said light emitting module and to calculate a distance to said object based on a light reception result of said reflected distance measuring light with respect to said photodetector, **characterized in that** said light emitting module is configured to include at least two light emitters (28, 44, 45, 56), the optical axes of the laser beams projected by said light emitters are parallel, at least one of said laser beams is said distance measuring light, each light emitter is configured to be arranged in such a manner that a distance between said optical axes is 1 mm to 5 mm, and said laser beams are substantially coaxially projected.

2. The surveying instrument according to claim 1, wherein said light emitting module (23, 42, 43, 51) is configured to include said at least two light emitters (28, 44, 45, 56) which project said distance measuring lights (29) having the same spread angle, and said arithmetic control module (17) is configured to cause said light emitters to repeatedly project said distance measuring lights in sequence.

3. The surveying instrument according to claim 1, wherein said light emitting module (23, 42, 43, 51) is configured to include said at least two light emitters (28, 44, 45, 56) which project said distance measuring lights (29) having the same spread angle, and said arithmetic control module (17) is configured to cause said light emitters to simultaneously project said distance measuring lights.

4. The surveying instrument according to claim 1, wherein said light emitting module (23, 42, 43, 51) is configured to include said at least two light emitters (28, 44, 45, 56) which project said distance measuring lights having different spread angles, and said arithmetic control module (17) is configured to select said light emitter to be driven based on said object or a distance to said object.

5. The surveying instrument according to any one of claims 1 to 4, comprising at least two light emitting modules (42, 43) and a deflecting member (24, 41, 48, 49) configured to substantially coaxially deflect said laser beams projected from said respective light emitting modules.

6. The surveying instrument according to any one of claims 1 to 5, further comprising a tracking light receiving module (55) configured to include a tracking photodetector (57) which receives a reflected tracking light (58) from said object, wherein said light emitting module (51) is configured to include a tracking light emitter (56c) which projects as a tracking light (52) a laser beam having a wavelength different from a wavelength of said distance measuring light (29), and said light emitters (56a, 56b) and said tracking light emitter are configured in such a manner that said distance measuring light and said tracking light are substantially coaxially projected.

7. The surveying instrument according to any one of claims 1 to 6, wherein said light emitting module (51) further comprises a light emitter configured to project a laser beam which is a visible light as a laser pointer light.

8. The surveying instrument according to claim 6, wherein said distance measuring light receiving module (54) and said tracking light receiving module (55) are configured to include a receiving prism (60) which internally reflects said reflected distance measuring light (34) and said reflected tracking light (58) more than once respectively and then separates said reflected distance measuring light and said reflected tracking light from each other.

9. The surveying instrument according to claim 6 or 8, further comprising a frame unit (5) configured to horizontally rotate around a horizontal rotation shaft (6) by a horizontal rotation motor (8), a scanning mirror (15) configured to vertically rotate around a vertical rotation shaft (11) by a vertical rotation motor (13) provided in said frame unit, to irradiate said object with said distance measuring light (29) and said tracking light (52), and to receive said reflected distance measuring light (34) and said reflected tracking light (58) from said object, wherein said arithmetic control module (17) is configured to control said horizontal rotation motor and said vertical rotation motor based on a light receiving position of said reflected tracking light with respect to said tracking photodetector (57) in such a manner that said object is tracked.

## Patentansprüche

1. Vermessungsinstrument umfassend: ein Entfernungsmesslichtprojektionsmodul (20, 53), das konfiguriert ist, um ein lichtemittierendes Modul (23, 42, 43, 51) zu enthalten, das einen Laserstrahl mit einer vorbestimmten Wellenlänge als Entfernungsmesslicht (29) auf ein Objekt projiziert, ein Entfernungsmesslichtempfangsmodul (21, 54), das konfiguriert ist, um einen Photodetektor (27) zu enthalten, der ein von dem Objekt reflektiertes Entfernungsmesslicht (34) empfängt, und ein arithmetisches Steuermodul (17), das konfiguriert ist, um das lichtemittierende Modul zu steuern und eine Entfernung zu dem Objekt auf der Grundlage eines Lichtempfangsergebnisses des reflektierten Entfernungsmesslichts in Bezug auf den Photodetektor zu berechnen, **dadurch gekennzeichnet, dass** das lichtemittierende Modul konfiguriert ist, um mindestens zwei Lichtemitter (28, 44, 45, 56) zu umfassen, die optischen Achsen der von den Lichtemittern projizierten Laserstrahlen parallel sind, mindestens einer der Laserstrahlen das Entfernungsmesslicht ist, jeder Lichtemitter konfiguriert ist, um in solch einer Weise angeordnet zu sein, dass eine Entfernung zwischen den optischen Achsen 1 mm bis 5 mm beträgt, und die Laserstrahlen im Wesentlichen koaxial projiziert werden.

2. Vermessungsinstrument nach Anspruch 1, wobei das lichtemittierende Modul (23, 42, 43, 51) konfiguriert ist, um die mindestens zwei Lichtemitter (28, 44, 45, 56) zu enthalten, die die Entfernungsmesslichter (29) mit demselben Ausstrahlungswinkel projizieren, und das arithmetische Steuermodul (17) so konfiguriert ist, um die Lichtemitter zu veranlassen, die Entfernungsmesslichter wiederholt nacheinander zu projizieren.

3. Vermessungsinstrument nach Anspruch 1, wobei das lichtemittierende Modul (23, 42, 43, 51) so konfiguriert ist, um die mindestens zwei Lichtemitter (28, 44, 45, 56) zu enthalten, die die Entfernungsmesslichter (29) mit demselben Ausstrahlungswinkel projizieren, und das arithmetische Steuermodul (17) so konfiguriert ist, um die Lichtemitter zu veranlassen, die Entfernungsmesslichter gleichzeitig zu projizieren.

4. Vermessungsinstrument nach Anspruch 1, wobei das lichtemittierende Modul (23, 42, 43, 51) so konfiguriert ist, um die mindestens zwei Lichtemitter (28, 44, 45, 56) zu enthalten, die die Entfernungsmesslichter mit unterschiedlichen Ausstrahlungswinkeln projizieren, und das arithmetische Steuermodul (17) so konfiguriert ist, um den anzusteuernden Lichtemitter auf Grundlage des Objekts oder einer Entfernung zu dem Objekt auszuwählen.

5. Vermessungsinstrument nach einem der Ansprüche 1 bis 4, umfassend mindestens zwei lichtemittierende Module (42, 43) und ein Ablenkelement (24, 41, 48, 49), das konfiguriert ist, um die von den jeweiligen lichtemittierenden Modulen projizierten Laserstrahlen im Wesentlichen koaxial abzulenken.

6. Vermessungsinstrument nach einem der Ansprüche 1 bis 5, ferner umfassend ein Nachführlichtempfangsmodul (55), das konfiguriert ist, um einen Nachführphotodetektor (57) zu enthalten, der ein von dem Objekt reflektiertes Nachführlicht (58) empfängt, wobei das lichtemittierende Modul (51) konfiguriert ist, um einen Nachführlichtemitter (56c) zu enthalten, der als Nachführlicht (52) einen Laserstrahl mit einer Wellenlänge projiziert, die sich von einer Wellenlänge des Entfernungsmesslichts (29) unterscheidet, und die Lichtemitter (56a, 56b) und der Nachführlichtemitter in solch einer Weise konfiguriert sind, dass das Entfernungsmesslicht und das Nachführlicht im Wesentlichen koaxial projiziert werden.

7. Vermessungsinstrument nach einem der Ansprüche 1 bis 6, wobei das lichtemittierende Modul (51) ferner einen Lichtemitter umfasst, der konfiguriert ist, um einen Laserstrahl, bei dem es sich um sichtbares Licht handelt, als Laserpointerlicht zu projizieren.

8. Vermessungsinstrument nach Anspruch 6, wobei das Entfernungsmesslichtempfangsmodul (54) und das Nachführlichtempfangsmodul (55) so konfiguriert sind, um ein Empfangsprisma (60) zu enthalten, das das reflektierte Entfernungsmesslicht (34) und das reflektierte Nachführlicht (58) jeweils mehr als einmal intern reflektiert und dann das reflektierte Entfernungsmesslicht und das reflektierte Nachführlicht voneinander separiert.

9. Vermessungsinstrument nach Anspruch 6 oder 8, ferner umfassend eine Rahmeneinheit (5), die konfiguriert ist, um sich durch einen Horizontal-Rotationsmotor (8) horizontal um eine Horizontal-Rotationswelle (6) zu drehen, einen Scanspiegel (15), der konfiguriert ist, um sich durch einen Vertikal-Rotationsmotor (13), der in der Rahmeneinheit vorgesehen ist, vertikal um eine Vertikal-Rotationswelle (11) zu drehen, um das Objekt mit dem Entfernungsmesslicht (29) und dem Nachführlicht (52) zu bestrahlen, und das reflektierte Entfernungsmesslicht (34) und das reflektierte Nachführlicht (58) von dem Objekt zu empfangen, wobei das arithmetische Steuermodul (17) konfiguriert ist, um den Horizontal-Rotationsmotor und den Vertikal-Rotationsmotor auf Grundlage einer Lichtempfangsposition des reflektierten Nachführlichts in Bezug auf den Nachführphotodetektor (57) in solch einer Weise zu steuern, dass das Objekt nachgeführt wird.

## Revendications

1. Instrument d'arpentage comprenant : un module de projection de lumière de mesure de distance (20, 53) configuré pour inclure un module d'émission de lumière (23, 42, 43, 51) qui projette un faisceau laser ayant une longueur d'onde prédéterminée en tant que lumière de mesure de distance (29) vers un objet, un module de réception de lumière de mesure de distance (21, 54) configuré pour inclure un photodétecteur (27) qui reçoit une lumière de mesure de distance réfléchie (34) depuis ledit objet, et un module de commande arithmétique (17) configuré pour commander ledit module d'émission de lumière et pour calculer une distance vers ledit objet sur la base d'un résultat de réception de lumière de ladite lumière de mesure de distance réfléchie par rapport audit photodétecteur, **caractérisé en ce que** ledit module d'émission de lumière est configuré pour inclure au moins deux émetteurs de lumière (28, 44, 45, 56), les axes optiques des faisceaux laser projetés par lesdits émetteurs de lumière sont parallèles, au moins un de lesdits faisceaux laser est ladite lumière de mesure de distance, chaque émetteur de lumière est configuré pour être disposé de manière à ce qu'une distance entre lesdits axes optiques soit de 1 mm à 5 mm, et lesdits faisceaux laser sont projetés de manière sensiblement coaxiale.

2. L'instrument d'arpentage selon la revendication 1, dans lequel ledit module d'émission de lumière (23, 42, 43, 51) est configuré pour inclure lesdits au moins deux émetteurs de lumière (28, 44, 45, 56) qui projettent lesdites lumières de mesure de distance (29) ayant le même angle de propagation,
et ledit module de commande arithmétique (17) est configuré pour faire en sorte que lesdits émetteurs de lumière projettent de manière répétée lesdites lumières de mesure de distance dans l'ordre.

3. L'instrument d'arpentage selon la revendication 1, dans lequel ledit module d'émission de lumière (23, 42, 43, 51) est configuré pour inclure lesdits au moins deux émetteurs de lumière (28, 44, 45, 56) qui projettent lesdites lumières de mesure de distance (29) ayant le même angle de propagation,
et ledit module de commande arithmétique (17) est configuré pour faire en sorte que lesdits émetteurs de lumière projettent simultanément lesdites lumières de mesure de distance.

4. L'instrument d'arpentage selon la revendication 1, dans lequel ledit module d'émission de lumière (23, 42, 43, 51) est configuré pour inclure lesdits au moins deux émetteurs de lumière (28, 44, 45, 56) qui projettent lesdites lumières de mesure de distance ayant des angles de propagation différents, et ledit module de commande arithmétique (17) est configuré pour sélectionner ledit émetteur de lumière à piloter en fonction dudit objet ou d'une distance par rapport à ledit objet.

5. L'instrument d'arpentage selon l'une des revendications 1 à 4, comprenant au moins deux modules d'émission de lumière (42, 43) et un élément de déviation (24, 41, 48, 49) configuré pour dévier sensiblement de façon coaxiale lesdits faisceaux laser projetés par lesdits modules d'émission de lumière respectifs.

6. L'instrument d'arpentage selon l'une des revendications 1 à 5, comprenant en outre un module de réception de lumière de poursuite (55) configuré pour inclure un photodétecteur de poursuite (57) qui reçoit une lumière de poursuite réfléchie (58) par ledit objet, dans lequel ledit module d'émission de lumière (51) est configuré pour inclure un émetteur de lumière de poursuite (56c) qui projette en tant que lumière de poursuite (52) un faisceau laser ayant une longueur d'onde différente d'une longueur d'onde de ladite lumière de mesure de distance (29), et lesdits émetteurs de lumière (56a, 56b) et ledit émetteur de lumière de poursuite sont configurés de manière à ce que ladite lumière de mesure de distance et ladite lumière de poursuite soient projetées de manière sensiblement coaxiale.

7. L'instrument d'arpentage selon l'une des revendications 1 à 6, dans lequel ledit module d'émission de lumière (51) comprend en outre un émetteur de lumière configuré pour projeter un faisceau laser qui est une lumière visible en tant que lumière de pointeur laser.

8. L'instrument d'arpentage selon la revendication 6, dans lequel ledit module de réception de la lumière de mesure de distance (54) et ledit module de réception de la lumière de poursuite (55) sont configurés pour inclure un prisme de réception (60) qui réfléchit intérieurement ladite lumière de mesure de distance réfléchie (34) et ladite lumière de poursuite réfléchie (58) plus d'une fois respectivement et qui sépare ensuite ladite lumière de mesure de distance réfléchie et ladite lumière de poursuite réfléchie l'une de l'autre.

9. L'instrument d'arpentage selon la revendication 6 ou 8, comprenant en outre une unité de cadre (5) configurée pour tourner horizontalement autour d'un arbre de rotation horizontal (6) par un moteur de rotation horizontal (8), un miroir de balayage (15) configuré pour tourner verticalement autour d'un arbre de rotation vertical (11) par un moteur de rotation vertical (13) fourni dans ladite unité de cadre, pour irradier ledit objet avec ladite lumière de mesure de distance (29) et ladite lumière de poursuite (52), et pour recevoir ladite lumière de mesure de distance réfléchie (34) et ladite lumière de poursuite réfléchie (58) de ledit objet, dans lequel ledit module de commande arithmétique (17) est configuré pour commander ledit moteur de rotation horizontal et ledit moteur de rotation vertical sur la base d'une position de réception de la lumière de ladite lumière de poursuite réfléchie par rapport audit photodétecteur de poursuite (57), de manière à poursuivre ledit objet.
